(19) Europäisches Patentamt
European Patent Office
Office européen des brevets

(11) EP 3 700 954 B1

(12) # FASCICULE DE BREVET EUROPEEN

(45) Date de publication et mention de la délivrance du brevet:
**09.08.2023 Bulletin 2023/32**

(21) Numéro de dépôt: **18800735.5**

(22) Date de dépôt: **26.10.2018**

(51) Classification Internationale des Brevets (IPC):
***C08G 18/48*** *(2006.01)* ***C08G 18/72*** *(2006.01)*
***C08G 18/75*** *(2006.01)* ***C08G 18/79*** *(2006.01)*
***C08G 18/08*** *(2006.01)* ***C09D 175/08*** *(2006.01)*
***C08G 18/32*** *(2006.01)*

(52) Classification Coopérative des Brevets (CPC):
**C08G 18/4854; C08G 18/0852; C08G 18/3218; C08G 18/725; C08G 18/755; C08G 18/792; C09D 175/08**

(86) Numéro de dépôt international:
**PCT/FR2018/052664**

(87) Numéro de publication internationale:
**WO 2019/081867 (02.05.2019 Gazette 2019/18)**

(54) **REVÊTEMENT POLYURÉTHANE COMPRENANT DE L'ISOSORBIDE**

POLYURETHANBESCHICHTUNG MIT ISOSORBID

POLYURETHANE COATING COMPRISING ISOSORBIDE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.10.2017 FR 1760155**

(43) Date de publication de la demande:
**02.09.2020 Bulletin 2020/36**

(73) Titulaire: **Roquette Frères**
**62136 Lestrem (FR)**

(72) Inventeurs:
- **JACQUEL, Nicolas**
  **59130 Lambersart (FR)**
- **SAINT-LOUP, René**
  **59160 Lomme (FR)**
- **PASCAULT, Jean-Pierre**
  **69009 Villeurbanne (FR)**
- **BLACHE, Héloïse**
  **76380 Canteleu (FR)**
- **ROUSSEAU, Alain**
  **69800 Saint-Priest (FR)**
- **MECHIN, Françoise**
  **69006 Lyon (FR)**
- **FLEURY, Etienne**
  **69510 Soucieu En Jarrest (FR)**

(74) Mandataire: **Plasseraud IP**
**66, rue de la Chaussée d'Antin**
**75440 Paris Cedex 09 (FR)**

(56) Documents cités:
**EP-A1- 3 222 644**

- **FENOUILLOT F ET AL: "Polymers from renewable 1.4:3,6 -dianhydrohexitols", PROGRESS IN POLYMER SCIENCE, PERGAMON PRESS, OXFORD, GB , vol. 35, no. 5 1 mai 2010 (2010-05-01), pages 578-622, XP002674686, ISSN: 0079-6700, DOI: 10.1016/J.PROGPOLYMSCI.2009.10.001 Extrait de l'Internet: URL:http://www.sciencedirect.com/science/article/pii/S0079670009000999 [extrait le 2009-10-30]**
- **ROMINA MARIN, SEBASTIAN MUNOZ-GUERRA: "Carbohydrate-Based Poly(ester-urethane)s: A comparative Study Regarding Cyclic Alditols Extenders and Polymerization Procedures", JOURNAL OF APPLIED POLYMER SCIENCE, vol. 114, 17 août 2009 (2009-08-17), pages 3723-3736, XP002782546, online DOI: 10.1002/app.30924**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 700 954 B1

## Description

### DOMAINE TECHNIQUE DE L'INVENTION

La présente invention concerne une composition réticulable permettant de former un revêtement polyuréthane sur différents types de substrats. La présente invention concerne en particulier une composition polyuréthane comprenant de l'isosorbide comme diol allongeur de chaîne et le revêtement polyuréthane obtenu à partir de cette composition.

### ART ANTERIEUR

De nombreuses industries ont besoin de compositions permettant de former des revêtements sur des substrats. Il peut s'agir par exemple de revêtements protecteurs, décoratifs, ou de traitement de surface.

La grande polyvalence des polyuréthanes en font une matière de choix pour les revêtements. Avec une gamme de dureté très large, une très bonne tenue aux chocs et à la fissuration et une très bonne résistance chimique, ils conviennent au revêtement de tous types de surfaces.

Un revêtement polyuréthane réticulé est classiquement obtenu par réaction d'un polyol à chaîne longue, d'un diol à chaîne courte et d'un polyisocyanate. Divers composés sont décrits dans la littérature pour chacun de ces réactifs. En général, au moins un des deux mélanges, soit le mélange de polyols, soit le mélange de polyisocyanates, présente une fonctionnalité strictement supérieure à deux afin d'obtenir un réseau. Le taux de composés de fonctionnalité supérieure ou égale à 2 permet d'adapter la densité de réticulation et est ainsi une des solutions pour adapter les propriétés du réseau.

Le polyisocyanate est généralement un polyisocyanate aliphatique ou un mélange de polyisocyanates aliphatiques ayant une fonctionnalité -NCO strictement supérieure à 2 quand ils sont employés avec des polyols de fonctionnalité moyenne égale à deux. En effet, par rapport aux polyisocyanates aromatiques, les polyisocyanates aliphatiques permettent d'obtenir des revêtements qui résistent avantageusement au jaunissement lorsqu'ils sont exposés à la lumière. La fonctionnalité -NCO strictement supérieure à 2 permet d'obtenir un polyuréthane réticulé.

Le polyol à chaîne longue est généralement un diol de type polyéther polyol ou un polyester polyol ou un polycarbonate polyol qui peut notamment avoir un poids moléculaire de 400 à 4 000 g/mol.

Le diol à chaîne courte, également appelé diol allongeur de chaîne, est généralement le 1,4-butanediol.

Le polyol à chaîne longue confère de la souplesse au revêtement polyuréthane. Le diol à chaîne courte contribue, avec le polyisocyanate, à la dureté du revêtement.

Un revêtement polyuréthane présente traditionnellement une seule température de transition vitreuse (Tg). En effet, un revêtement obtenu avec un matériau présentant une ségrégation de phase présenterait une coloration blanche liée à l'hétérogénéité du matériau, ces phases différentes se traduisant par des phénomènes optiques qui rendent le matériau opaque. La Tg d'un revêtement polyuréthane est supérieure ou égale à 30°C afin de ne pas lui conférer de pégosité dans les conditions d'usage usuelles.

Il existe un besoin pour de nouveaux revêtements polyuréthanes réticulés qui présentent de bonnes propriétés mécaniques, une bonne adhérence au substrat et une grande stabilité dans le temps.

La Demanderesse a découvert que le remplacement du 1,4-butanediol (BDO) comme allongeur de chaîne par de l'isosorbide permettait d'améliorer les propriétés du revêtement polyuréthane obtenu, en particulier l'adhérence au substrat, la résistance à l'impact et la résistance au pliage. De plus, l'utilisation de l'isosorbide permet d'augmenter la Tg et la rigidité du revêtement par rapport au même revêtement obtenu avec le BDO.

Le revêtement polyuréthane obtenu avec la composition de la présente invention présente en outre l'avantage d'être en partie obtenu à partir de matière première d'origine naturelle. En effet dans le contexte actuel de la diminution progressive des ressources en produits pétroliers, il est de plus en plus intéressant de remplacer les produits d'origine pétrolière par des produits d'origine naturelle.

### RESUME DE L'INVENTION

L'invention a ainsi pour objet une composition comprenant :

- une fraction polyol comprenant un polyol choisi parmi un polyester polyol, un polyéther polyol, un polycarbonate polyol ou un de leurs mélanges, ledit polyol étant un diol ou un mélange de diols ;
- une fraction polyisocyanate comprenant un polyisocyanate aliphatique;
- de l'isosorbide ;

dans laquelle la fraction polyisocyanate comprend un polyisocyanate ayant une fonctionnalité -NCO strictement supérieure à 2.

Un autre objet de l'invention est un procédé de fabrication d'un revêtement polyuréthane sur un substrat qui comprend les étapes suivantes :

- le dépôt sur le substrat d'une couche de la composition selon l'invention, puis
- la réticulation de la composition.

L'invention a également pour objet un revêtement polyuréthane susceptible d'être obtenu par le procédé selon l'invention.

## DESCRIPTION DETAILLEE

Dans la description qui suit, l'expression « compris entre... et... » doit être interprétée comme incluant les bornes de la gamme décrite.

### Composition de revêtement polyuréthane

La présente invention concerne une composition réticulable de revêtement polyuréthane.
Par « composition réticulable de revêtement polyuréthane » on entend, au sens de la présente invention, une composition apte à fournir un revêtement polyuréthane après réticulation de la composition.
Par « revêtement polyuréthane » on entend, au sens de la présente invention, un polyuréthane réticulé déposé sur un substrat solide sous la forme d'une couche mince, par exemple une couche d'une épaisseur de 20 à 500 micromètres, en particulier 20 um, 50 um, 100 um, 150 um, 200 um, 250 um, 300 um, 350 um, 400 um ou 450 μm. Il peut s'agir par exemple de revêtements protecteurs, décoratifs, ou de traitement de surface. Les films protecteurs, les vernis et les peintures font partie des revêtements au sens de la présente invention. Par « réticulation » on entend, au sens de la présente invention, la formation d'un ou de plusieurs réseaux tridimensionnels par création de liaisons chimiques entre les chaînes polymères. Un polymère peut être réticulé lorsqu'il comprend une unité monomère présentant plus de 2 fonctions réactives en polymérisation. Ainsi, le polyuréthane réticulé de l'invention est obtenu en introduisant dans la composition de revêtement polyuréthane un polyol ayant une fonctionnalité -OH strictement supérieure à 2 et/ou un polyisocyanate ayant une fonctionnalité -NCO strictement supérieure à 2. La réticulation peut notamment être réalisée sous action de la chaleur ou par irradiation par un faisceau d'UV, éventuellement en présence d'un catalyseur.
La composition réticulable de revêtement polyuréthane selon l'invention se distingue d'une composition de polyuréthane thermoplastique (TPU) et d'une composition d'adhésif à base de polyuréthane.
Ainsi, le revêtement polyuréthane obtenu par réticulation de la composition selon l'invention présente une seule température de transition vitreuse (Tg), ladite Tg étant supérieure ou égale à 20°C, de préférence supérieure ou égale à 25°C, plus préférentiellement supérieure ou égale à 30°C. La Tg du revêtement polyuréthane obtenu par réticulation de la composition selon l'invention peut notamment être mesurée par analyse mécanique dynamique ou par calorimétrie différentielle à balayage.

### Isosorbide

La composition selon l'invention comprend de l'isosorbide. L'isosorbide est utilisé en tant que diol allongeur de chaîne.
L'isosorbide est un diol cycloaliphatique répondant à la formule :

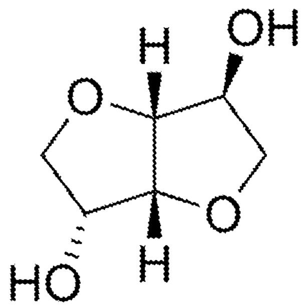

Le terme « isosorbide » tel qu'utilisé dans la présente demande englobe tous les stéréoisomères (i.e. les énantiomères ou diastéréoisomères) de l'isosorbide c'est à dire entre autre l'isoidide et l'isomannide.

Fraction polyol

La composition selon l'invention comprend une fraction polyol.

La fraction polyol comprend ou consiste en un polyol ou un mélange de polyols.

Par « polyol » on entend, au sens de la présente invention, un composé ayant une fonctionnalité -OH supérieure ou égale à 2. Le terme polyol inclut donc les diols et les triols. L'isosorbide n'est pas considéré comme un polyol au sens de la présente invention.

Par « fonctionnalité -OH » on entend, au sens de la présente invention, le nombre total de fonctions hydroxyles réactives par molécule de composé. La fonctionnalité -OH ($f_{OH}$) peut être calculée à partir de l'indice d'hydroxyle ($I_{OH}$), et la masse molaire moyenne en nombre du polyol ($Mn_{polyol}$) selon la formule suivante :

$$f_{OH} = (I_{OH} \times Mn_{polyol}) / 56\ 100$$

L'indice d'hydroxyle peut être mesuré par acétylation suivie d'un dosage en retour avec la potasse selon la Norme ISO 14900 : 2001, Plastiques - Polyols pour la production de polyuréthanne - Détermination de l'indice d'hydroxyle. L'indice hydroxyle est exprimé en mg KOH/g ce qui correspond à la quantité de KOH en mg qui est nécessaire pour neutraliser 1 g de polyol.

La fraction polyol comprend ou consiste en un diol ou un mélange de diols.

La fraction polyol peut en outre comprendre un triol.

Selon un mode de réalisation particulier, la fraction polyol comprend ou consiste en un mélange de diols et de triols.

Le polyol de la fraction polyol peut notamment présenter un poids moléculaire compris entre 400 et 4 000 g/mol, de préférence entre 500 et 2 000 g/mol et plus préférentiellement entre 600 et 1 500 g/mol.

Le polyol de la fraction polyol est un polyester polyol ou un polyéther polyol ou un polycarbonate polyol. Le polyester polyol, le polyéther polyol et le polycarbonate polyol sont de préférence des polyols linéaires pouvant contenir des unités monomères aliphatiques, alicycliques ou hétérocycliques.

Par « polyol linéaire » on entend, au sens de la présente invention, un polyol qui ne comprend pas de chaîne latérale ayant une fonction réactive pour la polymérisation.

Le polyéther polyol, également appelé polyalkylène éther polyol, est de préférence un polyéther linéaire ayant deux fonctions hydroxyles terminales. La portion alkylène peut comprendre 2 à 10 atomes de carbone, de préférence 2 à 4 atomes de carbone. Il peut notamment être obtenu par ouverture d'un éther cyclique, tel qu'un époxyde, avec un glycol. Les polyéthers polyols selon la présente invention comprennent les copolyéthers glycol blocs ou statistiques, notamment les copolymères blocs ou statistiques d'oxyde d'éthylène et d'oxyde de propylène. Des exemples de polyéthers polyols selon la présente invention sont un polyéthylène glycol (PEG), un polypropylène glycol (PPG), un poly(oxyéthylèneoxypropylène) glycol, un polytétraméthylène éther glycol (PTMEG) ou un de leurs mélanges.

Le polyester polyol est de préférence un polyester linéaire ayant deux fonctions hydroxyles terminales. Il peut être obtenu par condensation linéaire d'au moins un glycol avec au moins un acide dicarboxylique ou par réaction d'un ester cyclique avec un glycol. Les polyesters polyols selon la présente invention comprennent les copolyesters glycol blocs ou statistiques, de tels copolyesters polyols peuvent notamment être obtenus par l'utilisation d'un mélange d'au moins deux glycols et/ou au moins deux acides dicarboxyliques. Les glycols utilisés peuvent comprendre 2 à 8 atomes de carbone, de préférence 2 à 6 atomes de carbone, tels que l'éthylène glycol, le propylène glycol, le 1,3-propanediol, le butylène glycol, le 1,4-butanediol et le 1,6-hexanediol. Les acides dicarboxyliques utilisés ont généralement 4 à 10 atomes de carbone, tels que l'acide succinique, l'acide glutamique, l'acide glutarique, l'acide octanedioïque, l'acide sébacique, l'acide maléique, l'acide fumarique, l'acide adipique, l'acide azélaique, l'acide phtalique, l'acide isophtalique et l'acide terephtalique. L'acide dicarboxylique utilisé peut être un acide gras dicarboxylique, c'est-à-dire un acide dicarboxylique aliphatique saturé ou insaturé comprenant de 8 à 44 atomes entre les fonctions acides pouvant par exemple être synthétisé par dimérisation d'acides monocarboxyliques aliphatiques insaturés ou d'esters aliphatiques insaturés ayant entre 8 et 22 atomes de carbone tels que l'acide linoléique et l'acide linolénique. L'ester cyclique utilisé est généralement l'epsilon-caprolactone. Des exemples de polyesters polyols selon la présente invention sont des polyesters hydroxytéléchéliques de type poly(éthylène adipate), poly(propylène adipate), poly(propylène-co-éthylène adipate), poly(butylène adipate), poly(éthylène-co-butylène adipate), poly(caprolactone) diol, des copolymères de caprolactone et de lactide, ou un de leurs mélanges.

Le polycarbonate polyol est de préférence un polycarbonate linéaire ayant deux fonctions hydroxyles terminales. Il peut être obtenu par condensation linéaire d'au moins un glycol avec au moins un dérivé alkyl carbonate ou du phosgène. Il peut également être obtenu par réaction entre l'oxyde de propylène et du $CO_2$. Les polycarbonates polyols selon la présente invention comprennent les copolycarbonates glycol blocs ou statistiques, de tels copolycarbonates polyols peuvent notamment être obtenus par l'utilisation d'un mélange d'au moins deux glycols et d'alkyl carbonate. Les

diols peuvent être des diols aliphatiques linéaires, des diols cycliques ou des diols hétérocycliques.

Selon un mode de réalisation préféré, la fraction polyol comprend un polyol choisi parmi un polyéthylène glycol (PEG), un polypropylène glycol (PPG), un polytétraméthylène éther glycol (PTMEG), un poly(caprolactone) diol ou un de leurs mélanges ; de préférence un PTMEG ; plus préférentiellement un PTMEG ayant un poids moléculaire de 250 à 4 000, de préférence de 400 à 2 000 g/mol.

La quantité de polyol par rapport à la quantité d'isosorbide est ajustée afin d'obtenir un ratio molaire de l'ensemble des fonctions -OH de la fraction polyol sur l'ensemble des fonctions -OH de l'isosorbide compris entre 0,2 et 2, de préférence compris entre 0,3 et 1, plus préférentiellement compris entre 0,4 et 0,6.

Fraction polyisocyanate

La composition selon l'invention comprend une fraction polyisocyanate.

La fraction polyisocyanate comprend ou consiste en un polyisocyanate ou un mélange de polyisocyanates.

Par « polyisocyanate » on entend, au sens de la présente invention, un composé ayant une fonctionnalité -NCO supérieure ou égale à 2. Le terme polyisocyanate inclut donc notamment les diisocyanates ayant une fonctionnalité -NCO égale à 2, les triisocyanates ayant une fonctionnalité -NCO égale à 3, ainsi que les polyisocyanates ayant une fonctionnalité -NCO strictement supérieure à 2 et strictement inférieure à 3.

Par « fonctionnalité -NCO » on entend, au sens de la présente invention, le nombre total de fonctions isocyanates réactives par molécule de composé. La fonctionnalité -NCO peut être estimée par calcul après titrage NCO par dosage en retour de l'excès de dibutylamine par de l'acide chlorhydrique (selon la norme EN ISO 14896-2006).

La fraction polyisocyanate comprend un polyisocyanate aliphatique.

Par « polyisocyanate aliphatique » on entend, au sens de la présente invention, un polyisocyanate qui ne contient pas de cycle aromatique. Le terme polyisocyanate aliphatique inclut donc les polyisocyanates aliphatiques non cycliques et les polyisocyanates cycloaliphatiques.

La fraction polyisocyanate comprend un polyisocyanate ayant une fonctionnalité -NCO strictement supérieure à 2. Selon un mode de réalisation particulier, le polyisocyanate aliphatique présente une fonctionnalité -NCO strictement supérieure à 2, de préférence le polyisocyanate aliphatique est choisi parmi un trimère de diisocyanate, plus particulièrement un isocyanurate de diisocyanate, un biuret de diisocyanate ou un iminooxadiazinedione de diisocyanate répondant aux formules suivantes :

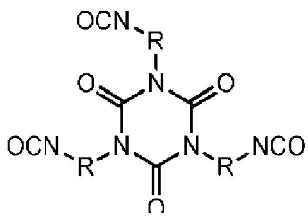

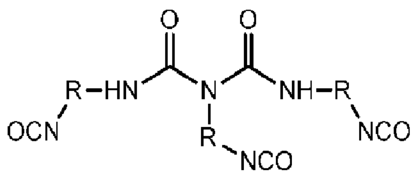

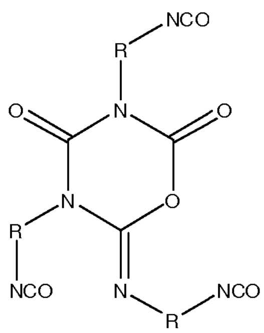

dans lesquelles R est un groupe alkylène en $C_4$-$C_{30}$, de préférence un groupe alkylène en $C_4$-$C_{20}$. Par « groupe alkylène en $C_4$-$C_{30}$ » on entend, au sens de la présente invention une chaîne alkyle divalente comprenant 4 à 30 atomes de carbone, saturé ou partiellement saturé, linéaire, linéaire ou ramifié, et pouvant comprendre un cycle aliphatique.

Selon un mode de réalisation particulier, le polyisocyanate aliphatique est choisi parmi un trimère de pentaméthylène diisocyanate (t-PMDI), un trimère d'hexaméthylène diisocyanate (t-HDI), un trimère de diisocyanate d'isophorone (t-IPDI) ou un de leurs mélanges ; de préférence t-IPDI ou t-PMDI.

La fraction polyisocyanate de la composition selon l'invention peut en outre comprendre un diisocyanate aliphatique. De préférence, le diisocyanate aliphatique est choisi parmi le pentaméthylène diisocyanate (PMDI), l'hexaméthylène diisocyanate (HDI), le diisocyanate d'isophorone (IPDI), le méthylène dicyclohexyl diisocyanate (HMDI ou MDI hydrogéné) ou un de leurs mélanges ; plus préférentiellement l'IPDI.

La fraction polyisocyanate peut notamment comprendre au moins 5% molaire rapporté aux fonctions -NCO, en particulier au moins 10% molaire rapporté aux fonctions -NCO, plus particulièrement au moins 15% molaire rapporté aux fonctions -NCO, de polyisocyanate aliphatique.

Selon un mode de réalisation particulier, la fraction polyisocyanate de la composition selon l'invention comprend :

- 1 à 40%, de préférence 2 à 30%, molaire rapporté aux fonctions -NCO de polyisocyanate aliphatique ; et
- 60 à 99%, de préférence 30 à 98%, molaire rapporté aux fonctions -NCO de diisocyanate aliphatique.

La quantité totale de polyisocyanate par rapport à la quantité d'isosorbide et de polyol est ajustée afin d'obtenir un ratio molaire de l'ensemble des fonctions -OH de la fraction polyol et de l'isosorbide sur l'ensemble des fonctions -NCO de la fraction polyisocyanate compris entre 0,8 et 1,2, de préférence compris entre 0,95 et 1,05.

Catalyseur

La composition selon l'invention peut en outre comprendre un catalyseur. Le catalyseur permet d'accélérer la réaction de polymérisation et/ou d'augmenter le degré de polymérisation du polyuréthane.

Des exemples de catalyseur pouvant être introduits dans la composition sont les sels d'acides organiques ou inorganiques ; les dérivés organométalliques du bismuth, du plomb, de l'étain, de l'antimoine, de l'uranium, du cadmium, du cobalt, du thorium, de l'aluminium, du mercure, du zinc, du nickel, du cérium, du molybdène, du vanadium, du cuivre, du manganèse ou du zirconium ; les phosphines ; les amines tertiaires organiques ; ou un de leurs mélanges. De préférence, le catalyseur est le dilaurate de dibutylétain.

Selon un mode de réalisation particulier, la quantité de catalyseur est comprise entre 0,001 et 5%, de préférence entre 0,005 et 1,0% en poids par rapport au poids total de la fraction polyol, de la fraction polyisocyanate et de l'isosorbide.

Solvant

La composition selon l'invention peut en outre comprendre un solvant.

Des exemples de solvants pouvant être introduits dans la composition sont les cétones, les solvants hydrocarbonés, les éthers, les esters, les nitriles, les sulfones, le diméthylsulfoxyde, les composés aromatiques ou un de leurs mélanges. De préférence, le solvant est choisi parmi la 2-butanone, la cyclopentanone, le diméthylisosorbide (DMI) ou un de leurs mélanges, plus préférentiellement un mélange de 2-butanone et de DMI.

Selon un mode de réalisation particulier, la quantité de solvant est comprise entre 10 et 60%, de préférence entre 20 et 50% en poids par rapport au poids total de la formulation.

Additifs

La composition selon l'invention peut également comprendre un agent d'étalement. L'agent d'étalement permet d'obtenir, avant réticulation, un bon étalement de la composition lorsqu'elle est appliquée sur le substrat. L'agent d'étalement peut être particulièrement utile pour éviter la formation de cratères dans le revêtement en abaissant la tension de surface de la composition.

Un exemple d'agent d'étalement pouvant être introduit dans la composition selon l'invention est un polydiméthylsiloxane modifié par polyéther tel que le BYK 307 commercialisé par BYK.

La quantité d'agent d'étalement dans la composition est de 0,01 à 0,2%, de préférence 0,05 à 0,15%, en poids par rapport au poids total de la fraction polyol, de la fraction polyisocyanate et de l'isosorbide.

La composition selon l'invention peut également comprendre d'autres additifs, par exemple des inhibiteurs de polymérisation, des colorants, des pigments, des opacifiants, des additifs de protection thermique ou ultra-violet, des agents anti-statiques, des agents antibactériens, anti-salissures ou anti-fongiques.

De préférence, la composition selon l'invention comprend moins de 10%, plus préférentiellement moins de 2% en poids de ces additifs, par rapport au poids de la composition.

Procédé de fabrication de la composition réticulable de revêtement polyuréthane

La composition selon l'invention peut être préparée en mélangeant les ingrédients qui la constituent, notamment sous agitation. La quantité de solvant permet d'ajuster la viscosité de la composition.

Procédé de fabrication du revêtement polyuréthane

Le procédé de fabrication du revêtement polyuréthane selon l'invention comprend une étape de dépôt sur un substrat solide d'une couche de la composition telle que décrite ci-avant.

Le dépôt de la composition peut être réalisé selon tout moyen connu de l'homme du métier, par exemple par trempage, par enduction centrifuge, par « barcoater », par « tape casting », par pulvérisation ou à l'aide d'un pinceau ou d'un rouleau. L'épaisseur de la couche déposée est ajustée en fonction de l'épaisseur du revêtement que l'on souhaite obtenir. L'épaisseur de la couche déposée peut, par exemple, être comprise entre 100 nm et 2 mm, de préférence de 100 à 500 micromètres. De préférence, la couche a une épaisseur uniforme, de manière à obtenir un revêtement final uniforme. Le substrat sur lequel est appliqué le revêtement peut être de toute sorte. Il peut s'agir un particulier d'un substrat en bois, en métal, en plastique, en verre ou en papier.

Le procédé selon l'invention comprend également une étape de réticulation de la composition.

La réticulation de la composition peut notamment se faire par chauffage. Selon un mode de réalisation particulier, le chauffage est réalisé à une température allant de 100°C à 250°C, préférentiellement de 150°C à 200°C. En particulier, la température peut être augmentée par paliers de température ou bien en utilisant une rampe de température.

La durée du chauffage peut notamment être comprise entre 1h et 5h, de préférence entre 1h30 et 3h.

Le chauffage peut également être réalisé sous vide.

Le procédé selon l'invention permet d'obtenir un revêtement polyuréthane présentant des propriétés intéressantes. En particulier, les revêtements obtenus peuvent présenter au moins une des propriétés suivantes :

- une bonne transparence ;
- un indice de réfraction faible ;
- une brillance élevée ;
- une bonne adhésion au substrat ;
- une dureté élevée ;
- une bonne résistance à l'abrasion ou à l'usure ;
- une bonne résistance chimique, aux solvants par exemple à l'eau ou bonne tenue à l'eau, mais aussi aux bases et aux acides ;
- une bonne tenue à l'impact/au choc ; et
- une bonne résistance à la déformation.

Les revêtements obtenus qui sont également des objets de la présente invention possèdent des propriétés au moins aussi bonnes, si ce n'est meilleures, que des revêtements actuellement disponibles obtenus avec le 1,4-butanediol comme diol allongeur de chaîne.

L'invention sera mieux comprise à la lumière des exemples non limitatifs et purement illustratifs suivants.

## EXEMPLES

### A. Préparation de compositions réticulables conformes (EX) ou non-conformes à l'invention (CEX):

Dans les exemples, les produits suivants ont été utilisés :

- polyol : poly(tétraméthylène glycol) de poids moléculaire 650 g/mol (PTMEG 650) ou 1 000 g/mol (PTMEG 1000) (Sigma-Aldrich)
- polyisocyanate : trimère de pentaméthylène diisocyanate (t-PMDI) (Covestro) ou trimère d'isophorone diisocyanate (t-IPDI)(Evonik)
- diisocyanate : isophorone diisocyanate (IPDI)(Aldrich)
- diol allongeur de chaîne : isosorbide (Roquette) ou 1,4-butanediol (BDO)(Sigma Aldrich)
- solvant : 2-butanone et diméthylisosorbide (Roquette)
- additif : polydiméthylsiloxane modifié par polyéther (BYK 307) (BYK)
- catalyseur : dilaurate de dibutyle étain (DBTDL) (Sigma Aldrich)

Différentes compositions ont été préparées en mélangeant les monomères indiqués dans le tableau ci-dessous avec une stœchiométrie (-OH polyol)/(-NCO polyisocyanate + diisocyanate)/(-OH allongeur de chaîne) de 1 / 3,05 / 2. Les monomères (c'est-à-dire le polyol, le diisocyanate, le polyisocyanate et l'allongeur de chaîne) sont introduits dans un mélange de solvant comprenant de la 2-butanone et du diméthylisosorbide (ratio volumique 1:5) de manière à obtenir une concentration de 70% en poids des monomères par rapport au poids de la composition. L'additif BYK 307 est ajouté pour diminuer les effets de cratère à un pourcentage de 0,1% en poids par rapport au poids des monomères. Le catalyseur

DBTDL est ajouté à un pourcentage de 0,025% en poids par rapport au poids des monomères afin d'accélérer la réaction (sauf pour la formulation CEX1 qui gélifiait avant application).

| | MONOMERES | | | |
|---|---|---|---|---|
| | Polyol | Diisocyanate (% molaire des fonctions NCO) | Polyisocyanate (% molaire des fonctions NCO) | Diol Allongeur de chaîne |
| EX1 | PTMEG 650 | - | t-PMDI (100%) | Isosorbide |
| EX2 | PTMEG 650 | IPDI (80%) | t-PMDI (20%) | Isosorbide |
| EX3 | PTMEG 1000 | IPDI (80%) | t-IPDI (20%) | Isosorbide |
| CEX1 | PTMEG 650 | - | t-PMDI (100% | BDO |
| CEX2 | PTMEG 650 | IPDI (80%) | t-PMDI (20%) | BDO |
| CEX3 | PTMEG 1000 | IPDI (80%) | t-IPDI (20%) | BDO |

**B. Réalisation des revêtements sur un support acier**

Une fine couche de composition réticulable telle que décrite ci-dessus a été déposée sur des plaques en acier (Q-panel R44 normée) à l'aide d'un bar-coater Sheen Instruments 1133N, équipé d'une barre de 150 $\mu$m afin de recouvrir toute la surface du support avec le minimum de composition.

La composition est ensuite réticulée dans une étuve à vide sous un vide de 100 mbar en suivant le cycle thermique suivant :

- chauffage à 100°C pendant 60 min ;
- augmentation de la température de chauffage de 100°C à 140°C avec une rampe de 2°C/min ;
- chauffage à 140°C pendant 90 min ;
- augmentation de la température de chauffage de 140°C à 160°C avec une rampe de 2°C/min ;
- chauffage à 160°C pendant 30 min.

**C. Caractérisation/évaluation des propriétés des revêtements ainsi obtenus**

Résistance à l'impact (bille de 1kg à 1 m)

Les mesures de résistance à l'impact ont été effectuées selon la norme ISO 6272 : Peintures et vernis - Essais de déformation rapide (résistance au choc) - Partie 1 : essai de chute d'une masse avec pénétrateur de surface importante.

Adhérence (test de quadrillage)

Les mesures d'adhérence ont été effectuées selon la norme ISO 2409 « Peintures et vernis - Essai de quadrillage ».

Pliage

Les tests de pliage ont été effectués par pliage à 90° du support (revêtement sur la face intérieure et extérieure). La résistance du revêtement a ensuite été évaluée qualitativement au niveau de la pliure.

Température de transition vitreuse(Tg)

Les mesures de Tg (exprimée en degré Celsius (°C)) ont été réalisées par calorimétrie différentielle à balayage

(mesurée au second passage -60°C à 250°C, 20°C.min$^{-1}$).

| | Résistance à l'impact | Adhérence | Pliage | Tg (°C) |
|---|---|---|---|---|
| EX1 | Bon | + (1) | OK | 30 |
| EX2 | Bon | ++ (0) | OK | 48 |
| EX3 | Bon | + (1) | Non réalisé | 43 |
| CEX1 | Mauvais | -- (4) | Déchirement | 4 |
| CEX2 | Bon | + (1) | OK | 14 |
| CEX3 | Bon | -- (4) | Non réalisé | -10 |

Les essais montrent que les revêtements obtenus après réticulation de compositions contenant l'isosorbide ont une Tg plus élevée que les revêtements correspondants obtenus avec le BDO. En outre, le remplacement de BDO par de l'isosorbide peut également conduire à l'augmentation de l'adhérence du revêtement sur le substrat et à l'augmentation de sa résistance au pliage (cf. EX2 par rapport à CEX2).

## Revendications

**1.** Composition réticulable de revêtement polyuréthane comprenant :

- une fraction polyol comprenant un polyol choisi parmi un polyester polyol, un polyéther polyol, un polycarbonate polyol ou un de leurs mélanges, ledit polyol étant un diol ou un mélange de diols ;
- une fraction polyisocyanate comprenant un polyisocyanate aliphatique ;
- de l'isosorbide ;

dans laquelle la fraction polyisocyanate comprend un polyisocyanate ayant une fonctionnalité -NCO strictement supérieure à 2,
**caractérisée en ce que** le ratio molaire de l'ensemble des fonctions -OH de la fraction polyol et de l'isosorbide sur l'ensemble des fonctions -NCO de la fraction polyisocyanate est compris entre 0,95 et 1,05 et le ratio molaire de l'ensemble des fonctions -OH de la fraction polyol sur l'ensemble des fonctions -OH de l'isosorbide est compris entre 0,3 et 1.

**2.** Composition selon la revendication 1, **caractérisée en ce que** le revêtement polyuréthane obtenu par réticulation de la composition présente une seule température de transition vitreuse Tg, ladite Tg étant supérieure ou égale à 20°C, de préférence supérieure ou égale à 25°C, plus préférentiellement supérieure ou égale à 30°C.

**3.** Composition selon l'une quelconque des revendications 1 à 2, **caractérisée en ce que** le ratio molaire de l'ensemble des fonctions -OH de la fraction polyol sur l'ensemble des fonctions -OH de l'isosorbide est compris entre 0,4 à 0,6.

**4.** Composition selon l'une quelconque des revendications 1 à 3, **caractérisée en ce que** le polyol présente un poids moléculaire compris entre 400 et 4 000 g/mol, de préférence entre 500 et 2 000 g/mol et plus préférentiellement entre 600 et 1 500 g/mol.

**5.** Composition selon l'une quelconque des revendications 1 à 4, **caractérisée en ce que** le polyol est choisi parmi un polyéthylène glycol (PEG), un polypropylène glycol (PPG), un polytétraméthylène éther glycol (PTMEG), un poly(caprolactone) diol, ou un de leurs mélanges ; de préférence un PTMEG ; plus préférentiellement un PTMEG ayant un poids moléculaire de 400 à 2000 g/mol.

**6.** Composition selon l'une quelconque des revendications 1 à 5, **caractérisée en ce que** la fraction polyol comprend en outre un triol.

**7.** Composition selon l'une quelconque des revendications 1 à 6, **caractérisée en ce que** le polyisocyanate aliphatique présente une fonctionnalité -NCO strictement supérieure à 2 ; de préférence le polyisocyanate aliphatique est choisi parmi un trimère de pentaméthylène diisocyanate (t-PMDI), un trimère d'hexaméthylène diisocyanate (t-HDI), un trimère de diisocyanate d'isophorone (t-IPDI) ou un de leurs mélanges ; de préférence t-IPDI ou t-PMDI.

8. Composition selon l'une quelconque des revendications 1 à 7, **caractérisée en ce que** la fraction polyisocyanate comprend en outre un diisocyanate aliphatique ; de préférence choisi parmi le pentaméthylène diisocyanate (PMDI), l'hexaméthylène diisocyanate (HDI), le diisocyanate d'isophorone (IPDI), le méthylène dicyclohexyl diisocyanate (HMDI ou MDI hydrogéné), ou un de leurs mélanges ; plus préférentiellement l'IPDI.

9. Composition selon l'une quelconque des revendications 1 à 8, **caractérisée en ce que** la fraction polyisocyanate comprend au moins 5% molaire rapporté aux fonctions -NCO, en particulier au moins 10% molaire rapporté aux fonctions -NCO, plus particulièrement au moins 15% molaire rapporté aux fonctions -NCO, de polyisocyanate aliphatique.

10. Composition selon l'une quelconque des revendications 1 à 9, **caractérisée en ce que** la fraction polyisocyanate comprend :

- 1 à 40%, de préférence 2 à 30%, molaire rapporté aux fonctions -NCO de polyisocyanate aliphatique ; et
- 60 à 99%, de préférence 70 à 98%, molaire rapporté aux fonctions -NCO de diisocyanate aliphatique.

11. Procédé de fabrication d'un revêtement polyuréthane sur un substrat comprenant les étapes suivantes :

- le dépôt sur le substrat d'une couche de la composition selon l'une quelconque des revendications 1 à 10, puis
- la réticulation de la composition.

12. Revêtement polyuréthane obtenu par le procédé tel que défini dans la revendication 11.

## Patentansprüche

1. Vernetzbare Polyurethanbeschichtungszusammensetzung, umfassend:

- eine Polyolfraktion, die ein Polyol umfasst, das aus einem Polyesterpolyol, einem Polyetherpolyol, einem Polyetherpolyol, einem Polycarbonatpolyol oder einer Mischung davon gewählt ist, wobei das Polyol ein Diol oder eine Mischung von Diolen ist;
- eine Polyisocyanat-Fraktion, die ein aliphatisches Polyisocyanat umfasst;
- Isosorbid;

wobei die Polyisocyanat-Fraktion ein Polyisocyanat mit einer-NCO-Funktionalität von streng größer als 2 umfasst,
**dadurch gekennzeichnet, dass** das Molverhältnis aller -OH-Funktionen der Polyolfraktion und des Isosorbids zu allen -NCO-Funktionen der Polyisocyanatfraktion zwischen 0,95 und 1,05 liegt und das Molverhältnis aller -OH-Funktionen der Polyolfraktion zu allen -OH-Funktionen des Isosorbids zwischen 0,3 und 1 liegt.

2. Zusammensetzung nach Anspruch 1, **dadurch gekennzeichnet, dass** die durch Vernetzung der Zusammensetzung erhaltene Polyurethanbeschichtung eine einzige Glasübergangstemperatur Tg aufweist, wobei Tg größer oder gleich 20 °C, bevorzugt größer oder gleich 25 °C, stärker bevorzugt größer oder gleich 30 °C ist.

3. Zusammensetzung nach einem der Ansprüche 1 bis 2, **dadurch gekennzeichnet, dass** das Molverhältnis aller -OH-Funktionen der Polyolfraktion zu allen -OH-Funktionen des Isosorbids zwischen 0,4 und 0,6 liegt.

4. Zusammensetzung nach einem der Ansprüche 1 bis 3, **dadurch gekennzeichnet, dass** das Polyol ein Molekulargewicht zwischen 400 und 4000 g/mol, bevorzugt zwischen 500 und 2000 g/mol und stärker bevorzugt zwischen 600 und 1500 g/mol aufweist.

5. Zusammensetzung nach einem der Ansprüche 1 bis 4, **dadurch gekennzeichnet, dass** das Polyol gewählt ist aus Polyethylenglykol (PEG), Polypropylenglykol (PPG), Polytetramethylenetherglykol (PTMEG), Poly(caprolacton)diol oder einer Mischung davon; bevorzugt ein PTMEG ist; stärker bevorzugt ein PTMEG mit einem Molekulargewicht von 400 bis 2000 g/mol ist.

6. Zusammensetzung nach einem der Ansprüche 1 bis 5, **dadurch gekennzeichnet, dass** die Polyolfraktion ferner ein Triol umfasst.

7. Zusammensetzung nach einem der Ansprüche 1 bis 6, **dadurch gekennzeichnet, dass** das aliphatische Polyisocyanat eine -NCO-Funktionalität aufweist, die streng größer als 2 ist; wobei das aliphatische Polyisocyanat bevorzugt gewählt ist aus Pentamethylendiisocyanat-Trimer (t-PMDI), Hexamethylendiisocyanat-Trimer (t-HDI), Isophorondiisocyanat-Trimer (t-IPDI) oder einer Mischung davon; bevorzugt t-IPDI oder t-PMDI.

8. Zusammensetzung nach einem der Ansprüche 1 bis 7, **dadurch gekennzeichnet, dass** die Polyisocyanatfraktion ferner ein aliphatisches Diisocyanat umfasst; bevorzugt gewählt aus Pentamethylendiisocyanat (PMDI), Hexamethylendiisocyanat (HDI), Isophorondiisocyanat (IPDI), Methylendicyclohexyldiisocyanat (hydriertes HMDI oder MDI) oder einer Mischung davon; stärker bevorzugt IPDI.

9. Zusammensetzung nach einem der Ansprüche 1 bis 8, **dadurch gekennzeichnet, dass** die Polyisocyanatfraktion wenigstens 5 Mol-%, bezogen auf die -NCO-Funktionen, insbesondere wenigstens 10 Mol-%, bezogen auf die -NCO-Funktionen, noch stärker bevorzugt wenigstens 15 Mol-%, bezogen auf die -NCO-Funktionen, aliphatisches Polyisocyanat enthält.

10. Zusammensetzung nach einem der Ansprüche 1 bis 9, **dadurch gekennzeichnet, dass** die Polyisocyanatfraktion umfasst:

- 1 bis 40 %, bevorzugt 2 bis 30 %, molar, bezogen auf die -NCO-Funktionen des aliphatischen Polyisocyanats; und
- 60 bis 99 %, bevorzugt 70 bis 98 %, molar, bezogen auf die -NCO-Funktionen des aliphatischen Diisocyanats.

11. Verfahren zur Herstellung einer Polyurethanbeschichtung auf einem Substrat, umfassend die folgenden Schritte:

- Abscheidung einer Schicht der Zusammensetzung nach einem der Ansprüche 1 bis 10 auf dem Substrat, dann
- Vernetzung der Zusammensetzung.

12. Polyurethanbeschichtung, erhalten durch das Verfahren wie in Anspruch 11 definiert.

## Claims

1. A crosslinkable polyurethane coating composition comprising:

- a polyol fraction comprising a polyol selected from a polyester polyol, a polyether polyol, a polycarbonate polyol or diol or a mixture thereof, said polyol being a diol or a mixture of diols;
- a polyisocyanate fraction comprising an aliphatic polyisocyanate;
- isosorbide;

wherein the polyisocyanate fraction comprises a polyisocyanate having an -NCO functionality which is strictly greater than 2,
**characterised in that** the molar ratio of all -OH functions of the polyol fraction and isosorbide to all -NCN functions of the polyisocyanate fraction is comprised between 0.95 and 1.05 and the molar ratio of all -OH functions of the polyol fraction to all -OH functions of isosorbide is comprised between 0.3 and 1.

2. The composition according to claim 1, **characterised in that** the polyurethane coating obtained by crosslinking the composition has a single glass transition temperature Tg, said Tg being greater than or equal to 20°C, preferably greater than or equal to 25°C, more preferably greater than or equal to 30°C.

3. The composition according to any one of claims 1 to 2, **characterised in that** the molar ratio of all -OH functions of the polyol fraction to all -OH functions of isosorbide is comprised between 0.4 and 0.6.

4. The composition according to any one of claims 1 to 3, **characterised in that** the polyol has a molecular weight comprised between 400 and 4000 g/mol, preferably between 500 and 2000 g/mol and more preferably between 600 and 1500 g/mol.

5. The composition according to any one of claims 1 to 4, **characterised in that** the polyol is selected from a polyethylene glycol (PEG), a polypropylene glycol (PPG), a polytetramethylene ether glycol (PTMEG), a poly(caprolactone) diol, or a mixture thereof; preferably a PTMEG; more preferably a PTMEG having a molecular weight of 400 to 2000 g/mol.

6. The composition according to any one of claims 1 to 5, **characterised in that** the polyol fraction further comprises a triol.

7. The composition according to any one of claims 1 to 6, **characterised in that** the aliphatic polyisocyanate has an -NCO functionality which is strictly greater than 2; preferably, the aliphatic polyisocyanate is selected from a trimer of pentamethylene diisocyanate (t-PMDI), a trimer of hexamethylene diisocyanate (t-HDI), a trimer of isophorone diisocyanate (t-IPDI) or a mixture thereof; preferably t-IPDI or t-PMDI.

8. The composition according to any one of claims 1 to 7, **characterised in that** the polyisocyanate fraction further comprises an aliphatic diisocyanate; preferably selected from pentamethylene diisocyanate (PMDI), hexamethylene diisocyanate (HDI), isophorone diisocyanate (IPDI), methylene dicyclohexyl diisocyanate (HMDI or hydrogenated MDI), or a mixture thereof; more preferably IPDI.

9. The composition according to any one of claims 1 to 8, **characterised in that** the polyisocyanate fraction comprises at least 5 mole % relative to the -NCO functions, in particular at least 10 mole % relative to the -NCO functions, more particularly at least 15 mole % relative to the -NCO functions, of aliphatic polyisocyanate.

10. The composition according to any one of claims 1 to 9, **characterised in that** the polyisocyanate fraction comprises:

    - 1 to 40 mole %, preferably 2 to 30 mole %, relative to the -NCO functions of aliphatic polyisocyanate; and
    - 60 to 99 mole %, preferably 70 to 98 mole %, relative to the -NCO functions of aliphatic diisocyanate.

11. A method for manufacturing a polyurethane coating on a substrate comprising the following steps:

    - depositing a layer of the composition on the substrate according to any one of claims 1 to 10, then
    - crosslinking the composition.

12. A polyurethane coating obtained by the method as defined in claim 11.